# EUROPEAN PATENT SPECIFICATION

(11) **EP 3 780 266 B1**
(45) Date of publication and mention of the grant of the patent: **26.10.2022**
(21) Application number: 20193549.1
(22) Date of filing: 07.07.2011
(51) Int. Cl.: H01Q 1/24, H01Q 7/00, H01Q 5/371

(54) **MOBILE TERMINAL**
MOBILES ENDGERÄT
TERMINAL MOBILE

(30) Priority: 25.02.2011 KR 20110017410
(43) Date of publication of application: 17.02.2021
(62) Divisional of application: 18197754.7
(73) Proprietor: LG Electronics Inc., 07336 SEOUL (KR)
(72) Inventor: KWAK, Daeyong, 06772 Seoul (KR); RHO, Sungjung, 06772 Seoul (KR); JUNG, Kangjae, 06772 Seoul (KR)
(74) Representative: Vossius & Partner Patentanwälte Rechtsanwälte mbB

(56) References cited:
- KR-A- 20110 008 606
- US-A- 4 940 992
- US-A- 5 557 293
- US-A1- 2007 182 658
- US-A1- 2009 197 654

## Description

### BACKGROUND OF THE INVENTION

### 1. Field of the invention

The present disclosure relates to a mobile terminal having an antenna transmitting and receiving radio electromagnetic waves.

### 2. Description of the related art

Mobile communication services continue to be evolved by the development of mobile communication technologies along with the consumer's request for more various services. The early stage of mobile communication services was simply focused on voice communications. However, in recent years, various mobile communication services have come out, such as multimedia services such as music or cinema, wireless portable Internet services allowing the Internet to be used while moving, and satellite communication services providing mobile communications beyond national boundaries.

On the other hand, as an antenna of the mobile communication terminal is made smaller in a typical mobile communication terminal, the radiation efficiency of the antenna is reduced, the frequency band is decreased, and the antenna gain is reduced. However, the miniaturization, multifunction, and high performance of a mobile communication terminal are continuously required in spite of the decreased performances. Accordingly, the miniaturization and high performance of an antenna which is used in the mobile communication system is also required.

An antenna for the mobile communication terminal in the related art has a 1/4 wavelength monopole or helical shape, which is protruded to the outside, thereby causing difficulty in the user's portability as well as having a rigidity problem. In order to solve those problems, the studies for an embedded antenna have been actively carried out.

US 4,940,992 A relates to an antenna for a low profile portable communications receiver, the antenna comprising a conductor formed into a single turn loop having a first set of parallel opposed sides one quarter wavelength or less in length at the operating frequency and a second set of parallel opposed sides, substantially shorter than the first set of sides.

US 5,557,293 A relates to a loop antenna being configured on a substrate which includes first and second radiator elements coupled through a common feed element.

Other mobile terminals are known from US 2007/182658 A1, US 2009/197654 A, or KR 2011 0008608 A.

The present invention has been contrived to solve the foregoing problems, and an aspect of the present disclosure is to provide a mobile terminal having an antenna device with a more enhanced performance, as defined in independent claim 1. Additional embodiments are defined in the dependent claims.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a front perspective view illustrating a front shape of a mobile terminal associated with an embodiment of the present invention;
FIG. 2 is a rear perspective view illustrating the mobile terminal of FIG. 1;
FIG. 3 is a perspective view illustrating a configuration in which a display unit is removed from the "A" portion of FIG. 1;
FIG. 4 is a conceptual view schematically illustrating the configuration of FIG. 3;
FIG. 5A , 5C, 5D, 5F through 5H are conceptual views of a loop antenna according to an embodiment of the present invention, illustrating the modified embodiment of each antenna, respectively;
FIG. 5B and 5E are conceptual views of a loop antenna not having all the claimed features but being useful for the understanding of the present invention;
FIG. 6 is a graph illustrating a voltage standing wave ratio based on frequency in case of an antenna according to an embodiment of the present invention;
FIG. 7 is a perspective view illustrating a configuration in which a display unit is removed from the "A" portion of FIG. 1 according to an example without all the claimed features but useful for the understanding of the present invention;
FIG. 8 is a conceptual view illustrating a loop antenna according to an example without all the claimed features but useful for the understanding of the present invention; and
FIG. 9 is a graph illustrating a voltage standing wave ratio based on frequency in case of an antenna according to an example.

### DETAILED DESCRIPTION OF THE INVENTION

Hereinafter, a mobile terminal associated with the present invention will be described in more detail with reference to the accompanying drawings. The suffixes "module" and "unit or portion" for components used in the following description merely provided only for facilitation of preparing this specification, and thus they are not granted a specific meaning or function. This specification employs like/similar reference numerals for like/similar components irrespective of different embodiments, so they all will be understood by the first description. The expression in the singular form in this specification will cover the expression in the plural form unless otherwise indicated obviously from the context.

A mobile terminal disclosed herein may include a portable phone, a smart phone, a laptop computer, a digital broadcast terminal, a personal digital assistant (PDA), a portable multimedia player (PMP), a navigation, and the like. However, it would be easily understood by those skilled in the art that a configuration according to the following description may be also applicable to a stationary terminal such as a digital TV, a desktop computer, and the like.

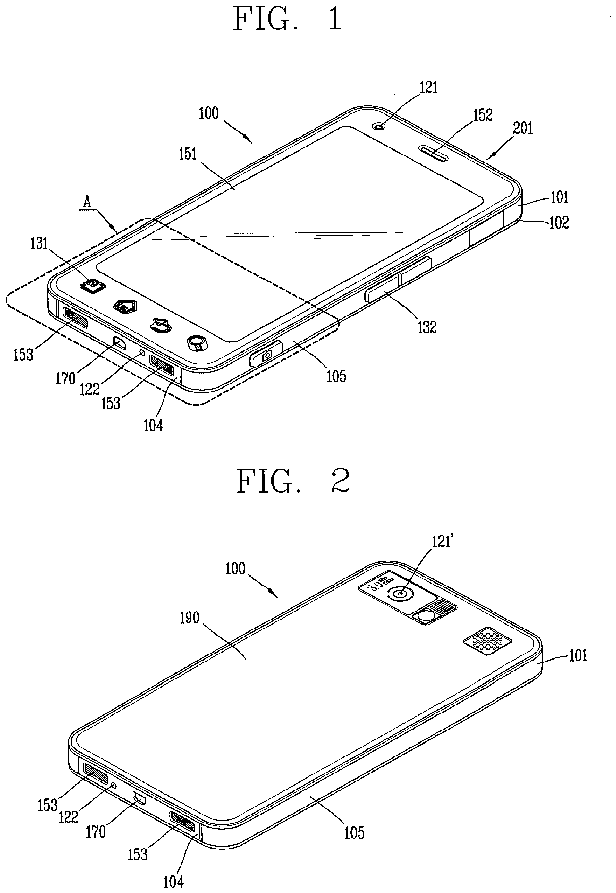

FIG. 1 is a front perspective view illustrating an example of the mobile terminal 100 associated with the present invention.

The mobile terminal 100 disclosed herein is provided with a bar-type terminal body. However, the present invention is not only limited to this, but also applicable to various structures such as a slide type, a folder type, a swivel type, a swing type, and the like, in which two and more bodies are combined with each other in a relatively movable manner.

The body includes a case (casing, housing, cover, etc.) forming an appearance of the terminal. In this embodiment, the case may be divided into a first case 101 and a second case 102. At least one middle case may be additionally disposed between the first case 101 and the second case 102.

The cases may be formed by injection-molding a synthetic resin or may be also formed of a metal material such as stainless steel (STS), titanium (Ti), or the like.

A display unit 151, an audio output module 152, a camera 121, a user input unit 131, 132, a microphone 122, an interface 170, and the like may be arranged on the terminal body, mainly on the first case 101.

The display unit 151 occupies a most portion of the main surface of the first case 101. The audio output unit 152 and the camera 121 are disposed on a region adjacent to one of both ends of the display unit 151, and the user input unit 131 and the microphone 122 are disposed on a region adjacent to the other end thereof. The user interface 132 and the interface 170, and the like, may be disposed on a lateral surface of the first case 101 and the second case 102.

The display unit 151 may display(output) information processed in the mobile terminal 100. For example, when the mobile terminal 100 is in a phone call mode, the display unit 151 may display a User Interface (UI) or a Graphic User Interface (GUI) associated with a call. When the mobile terminal 100 is in a video call mode or image capturing mode, the display unit 151 may display a captured image and/or received image, a UI or GUI.

The display unit 151 may include at least one of a Liquid Crystal Display (LCD), a Thin Film Transistor-LCD (TFT-LCD), an Organic Light Emitting Diode (OLED) display, a flexible display, a three-dimensional (3D) display.

Some of those displays may be configured with a transmission type or light transmission type to allow viewing of the exterior through the display unit, which may be called transparent displays. An example of the typical transparent displays may include a Transparent OLED (TOLED), and the like. Under this configuration, a user can view an object positioned at a rear side of a terminal body through a region occupied by the display unit 151 of the terminal body.

The display unit 151 may be implemented in two or more in number according to a configured aspect of the portable terminal 100. For instance, a plurality of the display units 151 may be arranged on one surface to be spaced apart from or integrated with each other, or may be arranged on different surfaces.

Here, if the display unit 151 and a touch sensitive sensor (referred to as a touch sensor) have an interlayer structure, the structure may be referred to as a touch screen. The display unit 151 may be used as an input device rather than an output device. The touch sensor may be implemented as a touch film, a touch sheet, a touch pad, and the like.

The interface 170 may serve as an interface with all external devices connected with the mobile terminal. For example, the external devices may include a wired/wireless headset, an external power charger, a wired/wireless data port, a card socket (e.g., memory card, SIM/UIM card, etc.), and the like. The interface 170 may be used to receive data or power from an external device and deliver it to each element within the mobile terminal, or may be used to transmit data within the mobile terminal to the external device.

The touch sensor may be configured to convert changes of a pressure applied to a specific part of the display unit 151, or a capacitance occurring from a specific part of the display unit 151, into electric input signals. Also, the touch sensor may be configured to sense not only a touched position and a touched area, but also a touch pressure.

When touch inputs are sensed by the touch sensors, corresponding signals are transmitted to a touch controller. The touch controller processes the received signals, and then transmits corresponding data to the controller. Accordingly, the controller may sense which region of the display unit 151 has been touched.

The user input unit is configured to receive a command for controlling the operation of the mobile communication terminal 100, and may include plurality of manipulation units 131, 132. The manipulation units 131, 132 may be commonly designated as a manipulating portion, and any method may be employed if it is a tactile manner allowing the user to perform manipulation with a tactile feeling.

The content inputted by the first and the second manipulation unit 131, 132 may be configured in various ways. For example, the first manipulation unit 131 may receive a command, such as start, end, scroll, or the like, and the second manipulation unit 132 may receive a command such as volume control of sound outputted from the audio output unit 152, switching into a touch recognition mode of the display unit 151, or the like.

FIG. 2 is a rear perspective view illustrating the mobile terminal of FIG. 1.

Referring to FIG. 2, a camera 121' may additionally be mounted on a rear surface, i.e. a second case 102 of the terminal body. The camera 121' has a capturing direction substantially opposite to that of the camera 121, and may have a different number of pixels from that of the camera 121.

For example, it is preferable that the camera 121 has a lower number of pixels to allow the user to capture the user's face and send it to another party in case of a video call or the like, and the camera 121' has a higher number of pixels to allow the user to capture a typical object but not to immediately send it. The cameras 121 and 121' may be provided in the terminal body in a rotatable or pop-up manner.

A flash and a mirror may be additionally disposed adjacent to the camera 121'. The flash emits light toward an object when capturing the object with the camera 121'. The mirror allows the user to reflect the user's own face when the user wants to capture himself or herself in a self-portrait mode using the camera 121'.

An audio output unit may be additionally disposed at a rear surface of the terminal body. The audio output unit may implement a stereo function together with the audio output unit 152, and may be used to implement a speakerphone mode during voice communication.

An antenna (not shown) for receiving a broadcasting signal in addition to an antenna for communication or the like may be additionally disposed at a lateral surface of the terminal body. An antenna constituting part of the broadcasting reception module may be provided in a retractable manner on the terminal body.

The power supply unit for supplying power to the mobile terminal 100 may be mounted on the terminal body. The power supply unit may be provided such that it is incorporated in the terminal body, or directly drawn out of the terminal body in a detachable manner. The power supply unit may be embedded by a battery cover 190.

A touch pad (not shown) for detecting a touch may be additionally mounted on the second case 102. The touch pad may be configured with a light transmission type similar to the display unit 151. In this case, if the display unit 151 is configured to output visual information from both surfaces thereof, then the visual information may be also recognized through the touch pad. All the information outputted to both surfaces thereof may be also controlled by the touch pad. On the contrary, a display unit may be additionally mounted on the touch pad, and thus a touch screen may be also disposed on the second case 102.

The touch pad may be operated in relation to the display unit 151 of the first case 101. The touch pad may be disposed in parallel to a rear side of the display unit 151. The touch pad may have the same or smaller size than the display unit 151.

### [Embodiment 1]

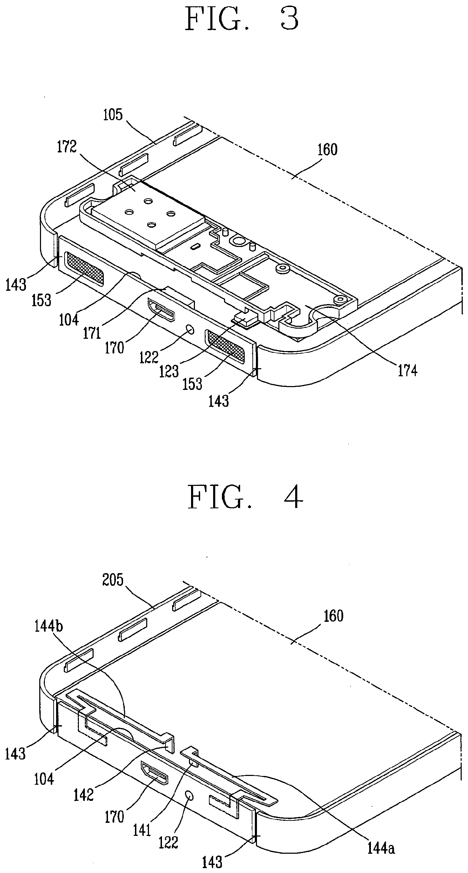

FIG. 3 is a perspective view illustrating a configuration in which a display unit is removed from the "A" portion of FIG. 1, and FIG. 4 is a conceptual view schematically illustrating the configuration of FIG. 3.

As illustrated in the drawing, a mobile terminal according to the present disclosure is a mobile terminal having a loop antenna, and the loop antenna uses a portion of the case formed along a lateral surface of the terminal body as part of a conductive loop. In other words, a loop antenna according to an embodiment of the present disclosure forms a closed loop together with a first member 104, a power feed connecting portion 141, a ground connecting portion 142, and a circuit board 160. The first member 104 and the second member 105 are part of a cover forming an external appearance of the terminal, and disposed to cover a lateral surface of the circuit board 160. The first member 104 may be formed by including a metal material, and operated as a main radiator in the loop antenna. Furthermore, at least part of the second member 105 is made of a conductive metal material to form another conductive loop.

The first member 104 and the power feed connecting portion 141 are connected to a first pattern 144a, and the first member 104 and the ground connecting portion 142 are connected to a second pattern 144b. The patterns are formed on a carrier 174. The first member 104, the second member 105 and the patterns are combined with one another to form a conductive loop operated at any one of a code division multiple access (CDMA) and global system for mobile (GSM) communication band (800-1000 MHz), a personal communication system (PCS) and digital cellular system (DCS) band (1700-1900 MHz), and a wideband CDMA (W-CDMA) communication band (2.4 GHz), securing sufficient band characteristics, respectively. The conductive loop may be formed to satisfy a half wavelength of a specific frequency.

The first pattern 144a and the second pattern 144b may have a conductor in a meander type, and the conductor may be fabricated in various forms according to the resonance or frequency characteristics. A current is power fed to the conductor through the power feed connecting portion 141, and a current power fed through the ground connecting portion 142 is short circuited.

A slit portion 143 is formed between the first member 104 and the second member 105 to separate them from each other. Due to this, the first member 104 may form a conductive loop together with the power feed connecting portion 141, the ground connecting portion 142, and the patterns. In other words, even if the second member 105 includes a conductive metal material, a current flow to the second member 105 may be blocked or a coupling effect thereon may be reduced to be operated as a loop antenna.

The power feed connecting portion 141 allows the first member 104 to be power fed by electrical connection (or electro-magnetic (EM) power feeding method), and the ground connecting portion 142 is ground connected to the first member 104 to be electrically shorted, thereby implementing antenna resonance frequency and impedance matching.

The power feed connecting portion 141 allows the first member 104 to be electrically connected to the power feeding device (not shown). For the connection thereof, the power feed connecting portion 141 may include a power feeding plate, a power feeding clip, and a power feeding line. Here, the power feeding plate, power feeding clip, and power feeding line are electrically connected to one another to transfer a current (or voltage) power fed through the power feeding device to a conductor of the radiating portion. Here, the power feeding line may include a microstrip printed on the substrate.

The ground connecting portion 142 allows an end of the first member 104 or second member 105 to be electrically connected to the electrical ground, thereby allowing the first member 104 or second member 105 to be grounded. The electrical earth may be a ground on the circuit board 160. Here, the ground connecting portion 142 may have at least two paths having a different length, and formed to have a switch corresponding to each path. Furthermore, each path allows the electrical earth and radiators (for example, a first member) to be connected with a different length in a selective manner. Here, the path may be an electrical pathway for connecting the earth to the radiator and may be formed by including a grounding plate, a grounding clip, and a grounding line. Furthermore, the grounding line may be formed with a different length, thereby providing a different length of the path.

As illustrated in FIG. 3, a speaker module 172, an interface module 171, or a microphone module 123 may be mounted at a location surrounded by the first member 104 and second member 105, and disposed adjacent to the first member 104. Furthermore, the speaker module 172, interface module 171, or microphone module 123 may be mounted on a carrier 174, and the carrier 174 may be disposed at the foregoing location.

At least one or holes communicated with the inner and outer portion of the body may be formed on the first member 104. A speaker 153 hole, an interface 170 housing, or a microphone 122 housing may be disposed on the hole.

In general, electrical elements are not mounted in a space obstructing the radiation efficiency of an antenna. However, when a portion of the case formed along a lateral surface of the terminal body as illustrated herein is used as part of a conductive loop, the electrical element and antenna may be disposed adjacent to each other to reduce efficiency deterioration, thereby allowing the effective use of a space within the terminal.

### Modification of the embodiment 1

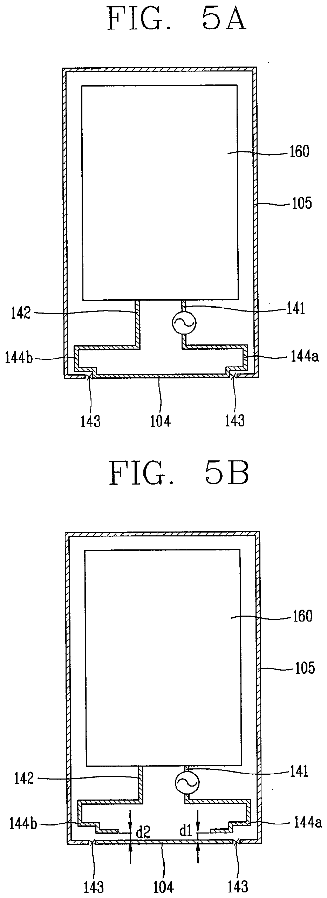

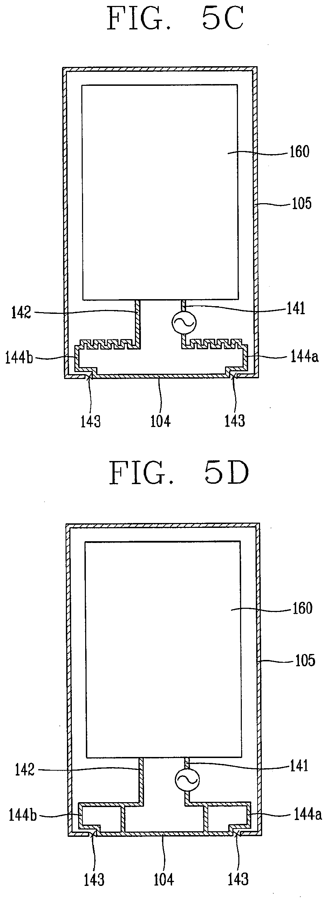

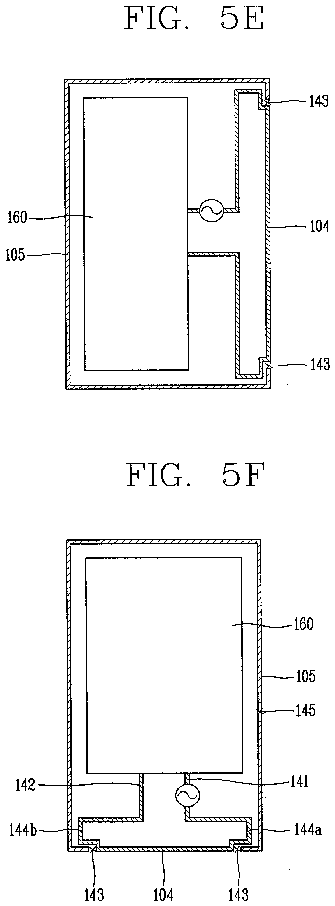

FIG. 5A, 5C, 5D, 5F through 5H are conceptual views of a loop antenna according to an embodiment of the present invention, illustrating the modified embodiment of each antenna, respectively. Fig. 5B and 5E are conceptual views of a loop antenna without all the claimed features but useful for the understanding of the present invention. The modification may be implemented by the embodiment 1.

According to the embodiment illustrated in FIG. 5A, a loop is formed from the power feed connecting portion 141 connected to the circuit board 160 to the ground connecting portion 142 through the patterns 144a, 144b and first member 104. The slit portions 143 are formed between the first member 104 and second member 105. In the loop antenna formed at a bottom end of the terminal, the primary radiation section may be formed to be directed to the outside in the length direction from the bottom end of the terminal, thereby reducing the deterioration of a radiation characteristic caused by an hand effect in a high-frequency band.

According to the example illustrated in FIG. 5B, the patterns 144a, 144b and the first member 104 are separated from each other by a predetermined distance (d1, d2) to achieve coupling power feeding and coupling grounding. In the modified embodiment, a contact structure is not required to connect the first member 104 to the patterns, and thus the process may be simplified to reduce the unit cost. For example, only the first pattern 144a and the first member 104 are power fed by coupling, and the second pattern 144b and the first member 104 are directly brought into contact with each other to form a ground connection, and thus an electrical characteristic at an end of the loop structure will be fixed, thereby satisfying the broadband characteristic of an antenna.

According to the embodiment illustrated in FIG. 5C, the patterns are formed in a meander structure to form a conductive pattern within a limited space, thereby further miniaturizing the antenna.

According to the embodiment illustrated in FIG. 5D, it may have a structure in which the patterns and the first member 104 are connected to each other, thereby providing a plurality of loops. As a result, it may be possible to transmit and receive radio signals corresponding to a plurality of frequencies required by the terminal as well as a specific frequency.

According to the example illustrated in FIG. 5E, the first member 104 may be formed on the left or right side of the terminal rather than on the top or bottom end thereof.

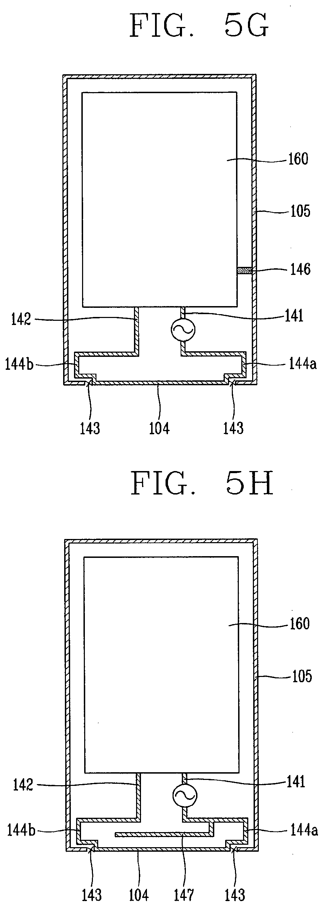

According to the embodiment illustrated in FIGS. 5F and 5G, at least one or more slits 145 are formed to communicate the inner and outer portion of the body to the second member 105, or the second member 105 and the circuit board 160 are electrically connected 146 to each other at least one or more points. Through this type of tuning, it may be possible to obtain a desired bandwidth and a desired resonance frequency.

According to the embodiment illustrated in FIG. 5H, it may further include a sub radiator 147 extended from any one point of the patterns or extended from any one point of the first member 104 to expand the bandwidth at a specific frequency. In this case, the first member 104 may be operated as a main radiator for a specific frequency.

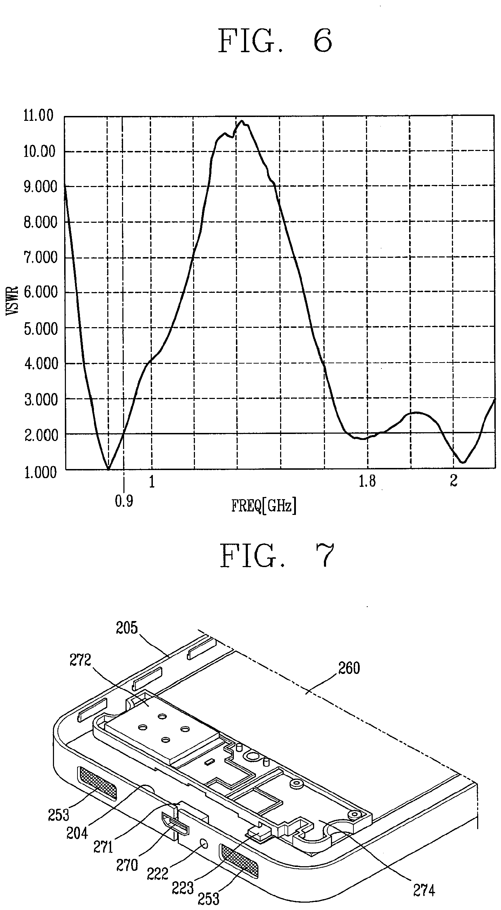

FIG. 6 is a graph illustrating a voltage standing wave ratio based on frequency in an antenna according to the embodiment of FIG. 5A. As illustrated in the drawing, the voltage standing wave ratio in a code division multiple access (CDMA) and global system for mobile (GSM) communication band (800-1000 MHz), a personal communication system (PCS) and digital cellular system (DCS) band (1700-1900 MHz), and a wideband CDMA (W-CDMA) communication band (2.4 GHz) is less than 3, respectively, and thus it is seen that the broadband characteristics at a radio frequency are excellent.

FIG. 7 is a perspective view illustrating a configuration in which a display unit is removed from the "A" portion of FIG. 1 according to an example,

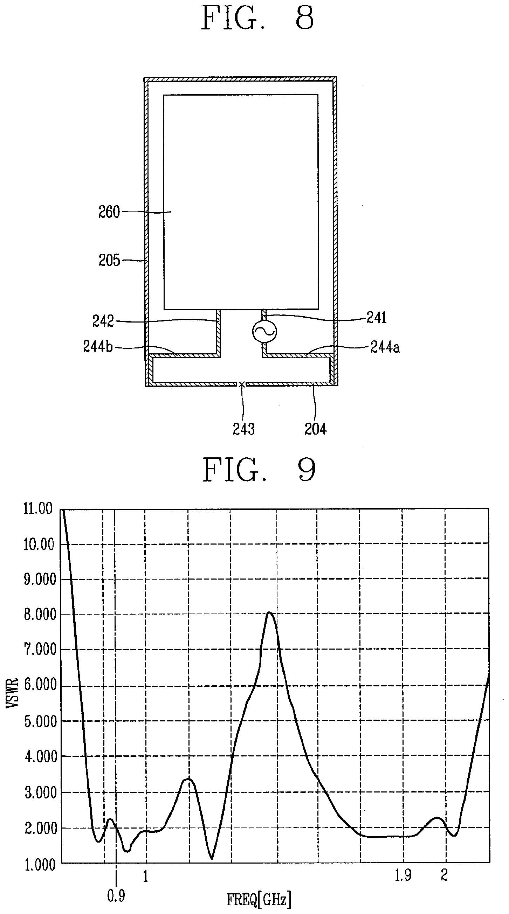

and FIG. 8 is a conceptual view illustrating a loop antenna according to an example.

As described above, according to this example, the same or similar reference numerals will be used to designate the same or similar elements, and the description thereof will be replaced with the foregoing description.

As illustrated in the drawing, a mobile terminal according to the example
is a mobile terminal having a loop antenna, and the loop antenna uses a portion of the case formed along a lateral surface of the terminal body as part of a conductive loop. In other words, a loop antenna according to the example forms a conductive loop together with a conductive member 204, a power feed connecting portion 241, a ground connecting portion 242, and a circuit board 260.

The conductive member 204 and the bezel member 205 are part of a cover forming an external appearance of the terminal, and disposed to cover a lateral surface of the circuit board 260. The conductive member 204 may be formed by including a conductive metal material, and operated as a main radiator in the loop antenna. Furthermore, at least part of the bezel member 205 may be made of a conductive metal material to form another conductive loop.

The conductive member 204 and the power feed connecting portion 241 are connected to a third pattern 244a, and the conductive member 204 and the ground connecting portion 242 are connected to a fourth pattern 244b. The patterns are formed on a carrier 274. The conductive member 204, the bezel member 205 and the patterns are combined with one another to form a conductive loop operated at any one of a code division multiple access (CDMA) and global system for mobile (GSM) communication band (800-1000 MHz), a personal communication system (PCS) and digital cellular system (DCS) band (1700-1900 MHz), and a wideband CDMA (W-CDMA) communication band (2.4 GHz), securing sufficient band characteristics, respectively. The conductive loop may be formed to satisfy a half wavelength of a specific frequency.

The third pattern 244a and the fourth pattern 244b may have a conductor in a meander type, and the conductor may be fabricated in various forms according to the resonance or frequency characteristics. A current is power fed to the conductor through the power feed connecting portion 241, and a current power fed through the ground connecting portion 242 is short circuited.

A through portion passed through at least part of the conductive member 204 to communicate the inner and outer portion of the body or a separate slit portion 243 configured to separate the conductive member 204 into a plurality of members are formed on the conductive member 204. Due to this, the conductive member 204 is combined together with the power feed connecting portion 241, the ground connecting portion 242, the bezel member 205, and the patterns to form at least one or more conductive loops capable of transmitting and receiving radio signals at a specific frequency.

As illustrated in FIG. 7, a speaker module 272, an interface module 271, or a microphone module 223 may be mounted at a location surrounded by the conductive member 204 and bezel member 205 and disposed adjacent to the conductive member 204. Furthermore, the speaker module 272, interface module 271, or microphone module 223 may be mounted on a carrier 274, and the carrier 274 may be disposed at the foregoing location.

At least one or holes communicated with the inner and outer portion of the body may be formed on the conductive member 204. A speaker 253 hole, an interface 270 housing, or a microphone 222 housing may be disposed on the hole.

FIG. 9 is a graph illustrating a voltage standing wave ratio based on frequency in an antenna according to the example of FIG. 8. As illustrated in the drawing, the voltage standing wave ratio in a code division multiple access (CDMA) and global system for mobile (GSM) communication band (800-1000 MHz), a personal communication system (PCS) and digital cellular system (DCS) band (1700-1900 MHz), and a wideband CDMA (W-CDMA) communication band (2.4 GHz) is less than 3, respectively, and thus it is seen that the broadband characteristics at a radio frequency are excellent.

## Claims

1. A mobile terminal comprising:
a circuit board (160);
an antenna for transmitting and receiving radio signals;
a case having two long lateral surfaces and two short lateral surfaces which are comprising a metal material;
wherein the case comprises:
a first member (104),
a second member (105); wherein the first member (104) and the second member (105) are disposed to cover lateral surfaces of the circuit board (160) and define external surfaces of the mobile terminal;
a first slit portion (143) located at a first end of the first member (104);
a second slit portion (143) located at a second end of the first member (104), the second end of the first member (104) being opposite to the first end of the first member (104),
wherein the first slit portion (143) and the second slit portion (143) are located at one of the two short lateral surfaces of the case;
wherein the antenna comprises:
the first member (104), wherein the first member (104) forms a radiator of the antenna;
a power feed connector (141) for electrically connecting the first member (104) with the circuit board (160); and
a ground connector (142) for electrically ground-connecting the first member (104) with the circuit board (160),
such that the power feed connector (141), the first member (104), and the ground connector (142) form a conductive loop for radiating the radio signals, and
wherein the one of the two short lateral surfaces of the case corresponds to a bottom lateral surface of the mobile terminal or to a top lateral surface of the mobile terminal.

2. The mobile terminal according to claims 1, wherein the first member (104) includes at least one hole penetrated from an inner portion of the case to an outer portion of the case, and
wherein at least one of a speaker module (172), an interface module (171) or a microphone module (123) is disposed adjacent to the at least one hole of the first member (104).

3. The mobile terminal according to any one of claims 1 to 2, wherein the second member (105) extends from each of the two long lateral surfaces to the one of the two short lateral surfaces such that the second member (105) is adjacent to the first end and the second end of the first member (104).

4. The mobile terminal according to any one of claims 1 to 3, wherein a primary radiation section of the antenna is formed to be directed to the outside in length direction from the one of the two short lateral surfaces of the case to reduce the deterioration of a radiation characteristic caused by a hand effect.

5. The mobile terminal according to any one of claims 1 to 4, wherein the second member (105) comprises at least another one slit portion (145) at at least one of the two long lateral surfaces of the case.

6. The mobile terminal according to any one of claims 1 to 5, further comprising:
a display unit (151);
wherein the case comprises a first case (101) and a second case (102),
wherein the display unit (151) is disposed at a front side of the first case (101),
wherein the second case (102) is disposed at a rear side of the first case (101),
wherein the display unit (151) occupies a most portion of the front side of the first case (101).

7. The mobile terminal according to any one of claims 1 to 6, wherein the first member (104) is configured to transmit and receive radio frequency signals in a wideband CDMA communication band.

8. The mobile terminal according to any one of claims 6 to 7, wherein a portion of the antenna overlaps with a portion of the display unit (151).

9. The mobile terminal according to any one of claims 1 to 8, wherein the first member (104) comprises a sub radiator (147) extended from a portion of the first member (104).

10. The mobile terminal according to any one of claims 1 to 9, the antenna further comprising: a first pattern (144a) configured to electrically connect the power feed connector (141) to the first member (104).

11. The mobile terminal according to any one of claims 1 to 10, the antenna further comprising: a second pattern (144b) configured to electrically connect the ground connector (142) to the first member (104).

12. The mobile terminal according to any one of claims 1 to 11, wherein the power feed connector (141) and the ground connector (142) are disposed adjacent to each other.

13. The mobile terminal according to any one of claims 1 to 12, wherein the second member (105) and the circuit board (160) are electrically connected to each other.

## Patentansprüche

1. Mobiles Endgerät mit:
einer Leiterplatte (160);
einer Antenne zum Senden und Empfangen von Funksignalen;
einem Gehäuse mit zwei langen Seitenflächen und zwei kurzen Seitenflächen, die ein Metallmaterial aufweisen;
wobei das Gehäuse aufweist:
ein erstes Element (104),
ein zweites Element (105);
wobei das erste Element (104) und das zweite Element (105) so angeordnet sind, dass sie Seitenflächen der Leiterplatte (160) bedecken und Außenoberflächen des Endgeräts definieren;
einen ersten Schlitzabschnitt (143), der an einem ersten Ende des ersten Elements (104) angeordnet ist;
einen zweiten Schlitzabschnitt (143), der an einem zweiten Ende des ersten Elements (104) angeordnet ist, wobei das zweite Ende des ersten Elements (104) dem ersten Ende des ersten Elements (104) gegenüberliegt, wobei der erste Schlitzabschnitt (143) und der zweite Schlitzabschnitt (143) an der einen der beiden kurzen Seitenflächen des Gehäuses angeordnet sind;
wobei die Antenne aufweist:
das erste Element (104), wobei das erste Element (104) einen Strahler der Antenne bildet;
einen Stromversorgungsverbinder (141) zum elektrischen Verbinden des ersten Elements (104) mit der Leiterplatte (160); und
einen Masseverbinder (142) zum elektrischen Masseverbinden des ersten Elements (104) mit der Leiterplatte (160),
so dass der Stromversorgungsverbinder (141), das erste Element (104) und der Masseverbinder (142) eine leitfähige Schleife zum Abstrahlen der Funksignale bilden, und
wobei die eine der beiden kurzen Seitenflächen des Gehäuses einer unteren Seitenfläche des mobilen Endgeräts oder einer oberen Seitenfläche des mobilen Endgeräts entspricht.

2. Mobiles Endgerät nach Anspruch 1, wobei das erste Element (104) mindestens ein Loch aufweist, das von einem inneren Abschnitt des Gehäuses zu einem äußeren Abschnitt des Gehäuses durchdringt, und
wobei mindestens ein Lautsprechermodul (172), ein Schnittstellenmodul (171) oder ein Mikrofonmodul (123) benachbart zu dem mindestens einen Loch des ersten Elements (104) angeordnet ist.

3. Mobiles Endgerät nach einem der Ansprüche 1 bis 2,
wobei sich das zweite Element (105) von jeder der beiden langen Seitenflächen zu einer der beiden kurzen Seitenflächen erstreckt, so dass das zweite Element (105) zum ersten Ende und zum zweiten Ende des ersten Elements (104) benachbart ist.

4. Mobiles Endgerät nach einem der Ansprüche 1 bis 3,
wobei ein primärer Strahlungsabschnitt der Antenne so ausgebildet ist, dass er in Längsrichtung von der einen der beiden kurzen Seitenflächen des Gehäuses nach außen gerichtet ist, um die durch eine Handwirkung verursachte Verschlechterung einer Strahlungscharakteristik zu reduzieren.

5. Mobiles Endgerät nach einem der Ansprüche 1 bis 4,
wobei das zweite Element (105) mindestens einen anderen Schlitzabschnitt (145) an mindestens einer der beiden langen Seitenflächen des Gehäuses aufweist.

6. Mobiles Endgerät nach einem der Ansprüche 1 bis 5, das ferner aufweist:
eine Anzeigeeinheit (151);
wobei das Gehäuse ein erstes Gehäuse (101) und ein zweites Gehäuse (102) aufweist,
wobei die Anzeigeeinheit (151) auf einer Vorderseite des ersten Gehäuses (101) angeordnet ist,
wobei das zweite Gehäuse (102) auf einer Rückseite des ersten Gehäuses (101) angeordnet ist,
wobei die Anzeigeeinheit (151) den größten Teil der Vorderseite des ersten Gehäuses (101) einnimmt.

7. Mobiles Endgerät nach einem der Ansprüche 1 bis 6,
wobei das erste Element (104) konfiguriert ist, Hochfrequenzsignale in einem Breitband-CDMA-Kommunikationsband zu senden und zu empfangen.

8. Mobiles Endgerät nach einem der Ansprüche 6 bis 7,
wobei sich ein Abschnitt der Antenne mit einem Abschnitt der Anzeigeeinheit (151) überlappt.

9. Mobiles Endgerät nach einem der Ansprüche 1 bis 8,
wobei das erste Element (104) einen Teilstrahler (147) aufweist, der sich von einem Abschnitt des ersten Elements (104) erstreckt.

10. Mobiles Endgerät nach einem der Ansprüche 1 bis 9,
wobei die Antenne ferner aufweist:
ein erstes Muster (144a), das konfiguriert ist, den Stromversorgungsverbinder (141) elektrisch mit dem ersten Element (104) zu verbinden.

11. Mobiles Endgerät nach einem der Ansprüche 1 bis 10,
wobei die Antenne ferner aufweist:
ein zweites Muster (144b), das konfiguriert ist, den Masseverbinder (142) elektrisch mit dem ersten Element (104) zu verbinden.

12. Mobiles Endgerät nach einem der Ansprüche 1 bis 11,
wobei der Stromversorgungsverbinder (141) und der Masseverbinder (142) benachbart zueinander angeordnet sind.

13. Mobiles Endgerät nach einem der Ansprüche 1 bis 12,
wobei das zweite Element (105) und die Leiterplatte (160) elektrisch miteinander verbunden sind.

## Revendications

1. Terminal mobile, comprenant :
une carte de circuit (160) ;
une antenne pour transmettre et recevoir des signaux radio ;
un boîtier ayant deux surfaces latérales longues et deux surfaces latérales courtes comprenant un matériau métallique ;
où le boîtier comprend :
un premier élément (104) ;
un deuxième élément (105) ;
où le premier élément (104) et le deuxième élément (105) sont disposés de manière à couvrir des surfaces latérales de la carte de circuit (160) et définissent des surfaces externes du terminal mobile ;
une première partie fendue (143) située à une première extrémité du premier élément (104) ;
une deuxième partie fendue (143) située à une deuxième extrémité du premier élément (104), la deuxième extrémité du premier élément (104) étant opposée à la première extrémité du premier élément (104),
la première partie fendue (143) et la deuxième partie fendue (143) étant situées sur une des deux surfaces latérales courtes du boîtier ;
où l'antenne comprend :
le premier élément (104), le premier élément (104) formant un radiateur de l'antenne;
un connecteur d'alimentation en énergie (141) pour la connexion électrique du premier élément (104) avec la carte de circuit (160) ; et
un connecteur de terre (142) pour la connexion électrique de terre du premier élément (104) avec la carte de circuit (160),
de telle manière que le connecteur d'alimentation en énergie (141), le premier élément (104) et le connecteur de terre (142) forment une boucle conductrice pour l'émission des signaux radio, et
où ladite une des deux surfaces latérales courtes du boîtier correspond à une surface latérale inférieure du terminal mobile ou à une surface latérale supérieure du terminal mobile.

2. Terminal mobile selon la revendication 1,
où le premier élément (104) présente au moins une ouverture pénétrant d'une partie interne du boîtier à une partie externe du boîtier, et
où un module de haut-parleur (172), un module d'interface (171) ou un module de microphone (123) est disposé de manière adjacente à la au moins une ouverture du premier élément (104).

3. Terminal mobile selon la revendication 1 ou la revendication 2,
où le deuxième élément (105) s'étend depuis chacune des deux surfaces latérales longues vers ladite une des deux surfaces latérales courtes, de telle manière que le deuxième élément (105) est adjacent à la première extrémité et à la deuxième extrémité du premier élément (104.

4. Terminal mobile selon l'une des revendications 1 à 3,
où une section de rayonnement primaire de l'antenne est formée de manière à être dirigée vers l'extérieur dans le sens de la longueur depuis ladite une des deux surfaces latérales courtes du boîtier, afin de diminuer la dégradation d'une caractéristique de rayonnement due à une influence manuelle.

5. Terminal mobile selon l'une des revendications 1 à 4,
où le deuxième élément (105) comprend au moins une autre partie fendue (145) sur au moins une des deux surfaces latérales longues du boîtier.

6. Terminal mobile selon l'une des revendications 1 à 5, comprenant en outre :
une unité d'affichage (151) ;
où le boîtier comprend un premier boîtier (101) et un deuxième boîtier (102),
où l'unité d'affichage (151) est disposée sur un côté avant du premier boîtier (101),
où le deuxième boîtier (102) est disposé sur un côté arrière du premier boîtier (101),
où l'unité d'affichage (151) occupe la plus grande partie du côté avant du premier boîtier (101).

7. Terminal mobile selon l'une des revendications 1 à 6,
où le premier élément (104) est prévu pour transmettre et recevoir des signaux radiofréquence dans un système de communication AMDC à large bande.

8. Terminal mobile selon la revendication 6 ou la revendication 7,
où une partie de l'antenne chevauche une partie de l'unité d'affichage (151).

9. Terminal mobile selon l'une des revendications 1 à 8,
où le premier élément (104) comprend un sous-radiateur (147) s'étendant depuis une partie du premier élément (104).

10. Terminal mobile selon l'une des revendications 1 à 9, où l'antenne comprend en outre :
un premier motif (144a) prévu pour relier électriquement le connecteur d'alimentation en énergie (141) au premier élément (104).

11. Terminal mobile selon l'une des revendications 1 à 10, où l'antenne comprend en outre :
un deuxième motif (144b) prévu pour relier électriquement le connecteur de terre (142) au premier élément (104).

12. Terminal mobile selon l'une des revendications 1 à 11,
où le connecteur d'alimentation en énergie (141) et le connecteur de terre (142) sont disposés de manière adjacente l'un à l'autre.

13. Terminal mobile selon l'une des revendications 1 à 12,
où le deuxième élément (105) et la carte de circuit (160) sont électriquement reliés.
